(19) Europäisches Patentamt
European Patent Office
Office européen des brevets

(11) **EP 3 499 182 A1**

(12) **DEMANDE DE BREVET EUROPEEN**

(43) Date de publication:
**19.06.2019 Bulletin 2019/25**

(51) Int Cl.:
*G01B 21/16* (2006.01)   *F16G 13/00* (2006.01)
*G01M 13/02* (2019.01)   *G01B 5/16* (2006.01)
*G01B 7/04* (2006.01)   *G01B 11/14* (2006.01)

(21) Numéro de dépôt: **17207956.8**

(22) Date de dépôt: **18.12.2017**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**MA MD TN**

(71) Demandeur: **Momentum**
**33000 Bordeaux (FR)**

(72) Inventeur: **GAUTIER, Fabrice**
**33000 BORDEAUX (FR)**

(74) Mandataire: **Ipside**
**7-9 Allées Haussmann**
**33300 Bordeaux Cedex (FR)**

(54) **PROCÉDÉ POUR LA DÉTERMINATION DE L ALLONGEMENT D'UNE CHAÎNE DE TRANSMISSION MÉCANIQUE ET DISPOSITIF IMPLÉMENTANT UN TEL PROCÉDÉ**

(57)     L'invention concerne un procédé (10) et un dispositif pour la détermination d'un allongement d'une chaîne de transmission mécanique mise en mouvement par deux pignons comportant chacun une denture contrôlée par un capteur, ledit procédé étant caractérisé en ce qu'il comporte :
- une étape d'apprentissage (100) au cours de laquelle des signaux numériques $X_n$, $Y_n$ sont générés à partir desdits capteurs et un paramètre d'ajustement k1 entier est choisi sur la base desdits signaux numériques, en fonction d'un objectif de sensibilité de la détermination de l'allongement de la chaîne de transmission ;
- une étape ultérieure de surveillance (110) au cours de laquelle :
• des signaux numériques $X'_n$, $Y'_n$ sont générés à partir desdits capteurs ;
• un coefficient de corrélation courant C'(k1) entre lesdits signaux numériques $X'_n$, $Y'_n$ est évalué au paramètre d'ajustement k1 ;
• un pourcentage d'allongement $\Delta L\%$ de la chaîne de transmission mécanique est déterminé en fonction dudit coefficient de corrélation courant C'(k1).

FIG. 2

EP 3 499 182 A1

## Description

### DOMAINE DE L'INVENTION

La présente invention appartient au domaine de la mécanique industrielle.

Plus particulièrement, la présente invention concerne un dispositif pour la mesure d'une variation de longueur d'un élément de transmission de mouvement pendant son utilisation.

### ETAT DE L'ART

L'une des conséquences de l'usure d'une chaîne de transmission mécanique est l'allongement des mailles la constituant. Cet allongement peut par exemple être dû aux frottements mécaniques et à l'augmentation locale de température qui en résulte. Au-delà d'une tolérance d'allongement, généralement de l'ordre de 3%, les mailles de la chaîne s'engrènent mal avec les dents des pignons entraînant la chaîne, provoquant une usure des dents des pignons et des risques de déraillement importants ; et la chaîne doit être changée.

Afin de surveiller l'allongement d'une chaîne de transmission, il est connu des surveiller une distance entre deux points de la chaîne. Le brevet américain US 9 772 179 décrit un dispositif de surveillance de l'usure d'une chaîne par mesure de l'allongement de la chaîne. Pour réaliser cette mesure d'allongement, une vitesse de la chaîne est mesurée à l'aide de deux capteurs en mesurant le temps de trajet d'un premier point de mesure de la chaîne entre un capteur amont et un capteur aval. Cette vitesse étant calculée, la distance entre le premier point de mesure et un second point de mesure de la chaîne est ensuite calculée après mesure de l'intervalle temporel entre l'instant où le premier point passe au niveau du capteur aval et l'instant où le second point passe au niveau du capteur amont. Cette distance est ensuite comparée à une distance de référence entre les deux points lorsque la chaîne était neuve. Dans le cadre de cette solution, la distance entre les capteurs est connue et inférieure à une distance entre les points de mesure.

La demande de brevet britannique GB 2 377 918 décrit une solution analogue dans laquelle les points de mesure sont identifiés par des marqueurs.

Un inconvénient de ces solutions est qu'elles présentent des contraintes quant au positionnement des capteurs et au choix des points de mesure. Elles nécessitent par ailleurs de calculer la vitesse d'entraînement de la chaîne.

Le brevet américain US 5 563 392 décrit un dispositif pour la mesure de l'allongement d'une chaîne, au moyen de deux capteurs photoélectriques. Chaque capteur identifie la présence ou l'absence d'un type de lien de la chaîne se répétant périodiquement tout au long de la chaîne, de sorte que chaque capteur génère un signal sensiblement périodique. Préférentiellement, les capteurs sont placés de telle sorte que les signaux générés par les deux capteurs sont en phase. Lors de l'allongement de la chaîne, un déphasage apparaît entre les deux signaux, la valeur du déphasage permettant de quantifier le degré d'allongement de la chaîne.

Un inconvénient de cette solution est que la mesure du déphasage présente une sensibilité relativement faible, inversement proportionnelle à la vitesse de la chaîne de transmission, la sensibilité étant définie comme un rapport à la grandeur d'intérêt de la grandeur mesurée/déterminée pour parvenir à ladite grandeur d'intérêt.

### EXPOSE DE L'INVENTION

L'invention propose une solution pour pallier aux inconvénients de l'art antérieur.

L'invention concerne un procédé pour la détermination d'un allongement d'une chaîne de transmission mécanique mise en mouvement par deux pignons comportant chacun une denture contrôlée par un capteur.

Selon l'invention, le procédé comporte :

- une étape d'apprentissage au cours de laquelle des signaux numériques sont générés à partir desdits capteurs et un paramètre d'ajustement entier est choisi sur la base desdits signaux numériques, en fonction d'un objectif de sensibilité de la détermination de l'allongement de la chaîne de transmission ;
- une étape ultérieure de surveillance au cours de laquelle :

  • des signaux numériques sont générés à partir desdits capteurs ;
  • un coefficient de corrélation courant entre lesdits signaux numériques est évalué au paramètre d'ajustement ;
  • un pourcentage d'allongement de la chaîne de transmission mécanique est déterminé en fonction dudit coefficient de corrélation courant.

Dans un mode de mise en oeuvre, le pourcentage d'allongement est déduit de la lecture d'un abaque représentant une évolution du coefficient de corrélation courant en fonction du pourcentage d'allongement et du paramètre d'ajustement.

Dans un mode de mise en oeuvre, le pourcentage d'allongement est déduit de la lecture d'un abaque représentant une évolution d'un cumul des écarts, en valeur absolue, au fur et à mesure de l'allongement de la chaîne, entre le coefficient de corrélation courant et un coefficient de corrélation initial calculé au cours de l'étape d'apprentissage, en fonction du pourcentage d'allongement.

Dans un mode de mise en oeuvre, le paramètre d'ajustement est choisi comme étant un paramètre maximisant ou minimisant une valeur absolue d'un coefficient de corrélation entre les signaux numériques.

Dans un mode de mise en oeuvre, l'étape de surveillance comporte une sous-étape de déclenchement d'au moins une alarme lorsque le pourcentage d'allongement de la chaîne de transmission dépasse au moins une valeur seuil.

Dans un mode de mise en oeuvre, une de l'au moins une valeur seuil est égale à 3%.

L'invention concerne également un dispositif pour la mise en oeuvre du procédé selon l'invention, comportant :

- une chaîne de transmission mécanique mise en mouvement par deux pignons comportant chacun une denture ;
- deux capteurs à partir desquels sont générés les signaux numériques ;

Selon l'invention, le dispositif comporte par ailleurs des moyens de calcul pour :

- choisir un paramètre d'ajustement ;
- évaluer un coefficient de corrélation courant entre lesdits signaux numériques au paramètre d'ajustement ;
- déterminer le pourcentage d'allongement de la chaîne de transmission mécanique en fonction dudit coefficient de corrélation courant.

Dans une forme de réalisation, le dispositif comporte par ailleurs des moyens pour comparer le pourcentage d'allongement de la chaîne de transmission à au moins une valeur seuil et déclencher au moins une alarme en fonction de la valeur dudit pourcentage d'allongement de la chaîne.

Dans une forme de réalisation, les capteurs sont des capteurs magnétiques.

## BREVE DESCRIPTION DES FIGURES

L'invention sera mieux comprise à la lecture de la description qui suit et à l'examen des figures qui l'accompagnent. Celles-ci ne sont présentées qu'à titre indicatif et nullement limitatif de l'invention.

La figure 1A représente une chaîne de transmission mécanique et des capteurs contrôlant les dentures des pignons mettant la chaîne en mouvement.

La figure 1B représente un détail d'un brin de la chaîne de transmission.

La figure 2 représente les étapes du procédé selon l'invention.

La figure 3A représente l'évolution de l'amplitude des signaux numériques générés à partir des capteurs en fonction du temps, dans une forme de réalisation.

La figure 3B représente l'évolution des enveloppes des signaux numériques générés à partir des capteurs en fonction du temps, dans la forme de réalisation de la figure 3A.

La figure 4 est un abaque représentant une évolution du coefficient de corrélation des signaux générés par les capteurs dans la forme de réalisation de la figure 3A, en fonction du pourcentage d'allongement et du paramètre d'ajustement.

La figure 5A illustre une évolution du cumul des écarts, en valeur absolue, au fur et à mesure de l'allongement de la chaîne, entre le coefficient de corrélation déterminé au cours de l'étape de surveillance et un coefficient de corrélation initial calculé au cours de l'étape d'apprentissage dans le cas où le paramètre d'ajustement est choisi au cours de l'étape d'apprentissage comme maximisant le coefficient de corrélation.

La figure 5B illustre une évolution du cumul dans le cas où le paramètre d'ajustement est choisi nul.

La figure 5C représente un abaque regroupant les courbes des figures 5A et 5B.

## DESCRIPTION DETAILLEE

L'invention concerne un procédé 10 de traitement du signal mis en oeuvre dans le cadre d'une mesure de l'allongement d'une chaîne de transmission mécanique 1.

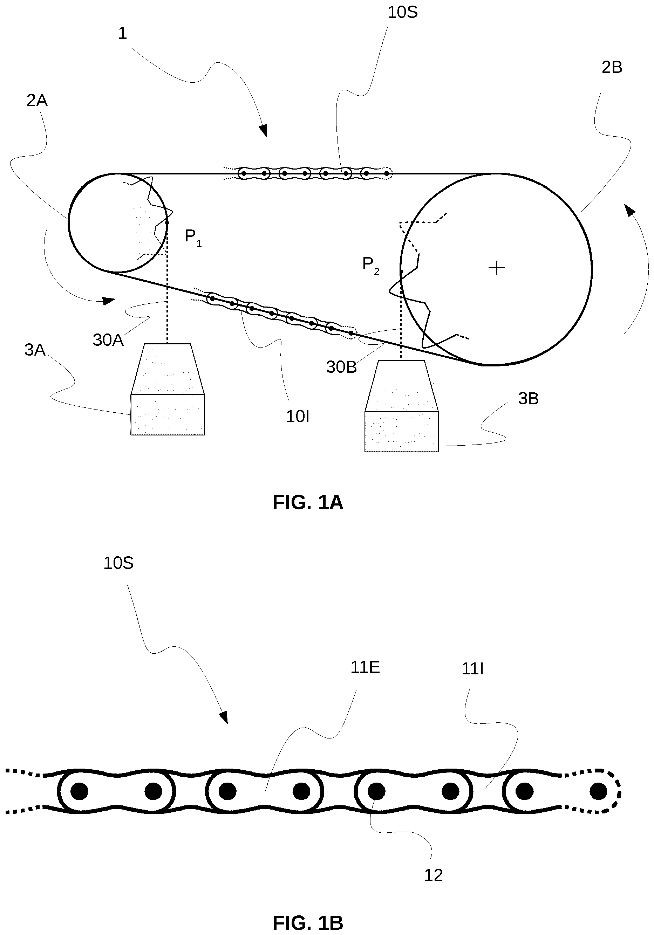

La figure 1A représente une chaîne de transmission mécanique 1 mise en mouvement par des pignons 2A, 2B. Des sens de rotation desdits pignons et de mouvement de ladite chaîne de transmission sont indiqués par des flèches sur la figure 1A. La chaîne de transmission 1 comporte un brin tendu, dans l'exemple illustré le brin supérieur 10S, et un brin de retour, dans l'exemple illustré le brin inférieur 10I, et comporte essentiellement une alternance de mailles internes 11I et de mailles externes 11E, comme illustré sur la figure 1B. La chaîne de transmission 1 présente généralement une maille de jonction non représentée sur les figures.

Bien entendu, les éléments représentés sur la figure 1A ne sont pas nécessairement à l'échelle.

Dans un souci de simplification, les mailles 11I, 11E illustrées sur la figure 1B ainsi que des dents des pignons 2A et 2B n'ont été représentées que partiellement sur la figure 1A. Le reste de la chaîne 1 est représenté symboliquement par une ligne moyenne passant par des douilles 12 de la chaîne. De la même manière, des dentures des pignons 2A, 2B ne sont représentées que partiellement, le reste desdites dentures des pignons étant par ailleurs représentées sur la figure par un diamètre primitif de chacun desdits pignons.

Par ailleurs, l'homme du métier comprendra à la lecture de ce qui suit que la taille des pignons 2A, 2B n'a pas d'importance et que les dimensions de l'un desdits pignons peuvent être, et sont généralement, différentes des dimensions de l'autre pignon. De la même manière, divers types de chaînes peuvent être utilisés sans limiter la portée de l'invention, par exemple chaînes à rouleaux ou chaînes à mailles jointives. De la même manière, l'homme du métier comprendra à la lecture de ce qui suit que la géométrie de la chaîne de transmission 1 n'a pas besoin d'être connue.

Deux capteurs 3A, 3B identiques dans leur fonctionnement sont placés dans un environnement des pignons 2A, 2B. Les capteurs 3A, 3B sont placés de telle sorte qu'à chaque pignon 2A, 2B est associé un desdits capteurs, lesdits capteurs détectant un mouvement des dents des pignons 2A, 2B en deux points fixes distincts P1, P2, comme schématisé sur la figure 1A, situés par exemple chacun sur un diamètre primitif d'un pignon 2A, 2B. Les points P1, P2 sont situés sur une portion du diamètre primitif sur laquelle les dents ne transportent pas la chaîne 1, c'est-à-dire en-dehors d'une portion d'enroulement.

La notion de « point » doit se comprendre ici comme étant une zone de l'espace située dans un champ de mesure d'un capteur, ladite zone étant de dimension la plus petite possible en fonction de la précision des capteurs utilisés. Une ligne de visée 30A, 30B de chacun des capteurs est représentée en trait interrompu sur la figure 1A.

Il doit être compris par « fixes » que les « points » P1, P2 sont immobiles dans un référentiel lié à un bâti (non représenté) de la chaîne de transmission 1. Les points P1, P2 ne sont donc pas rattachés physiquement aux pignons 2A, 2B en mouvement par rapport audit bâti, mais il peut par exemple être considéré que ces points sont placés chacun à une distance fixe des centres desdits pignons. Il convient toutefois de noter que la position des points P1, P2 sur le diamètre primitif du pignon 2A, 2B auquel ils sont respectivement associés et une distance entre lesdits points sont indifférentes dans le cadre de la mise en oeuvre du procédé selon l'invention, comme il sera compris par la suite.

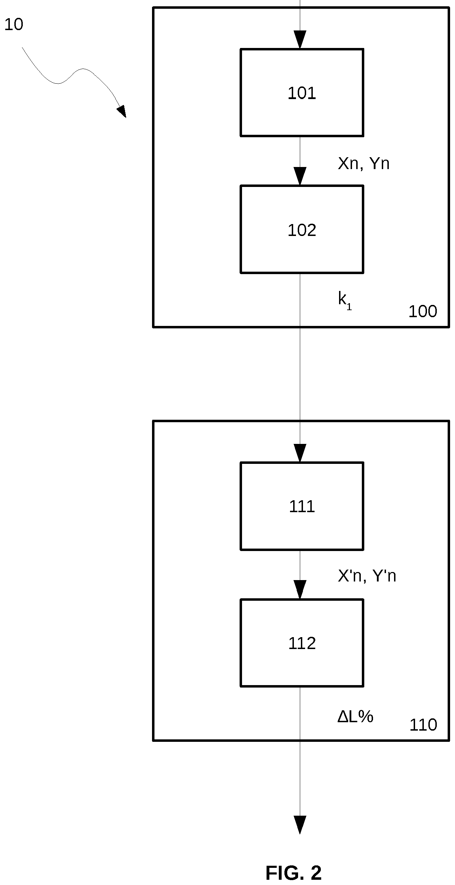

En référence à la figure 2, le procédé 10 selon l'invention comporte deux étapes principales: une étape d'apprentissage 100 et une étape de surveillance 110.

Dans une première sous-étape de mesurage 101 de l'étape d'apprentissage 100, les capteurs 3A, 3B réalisent chacun un mesurage d'une grandeur d'intérêt X, Y. La grandeur d'intérêt dépend du type de capteurs utilisés.

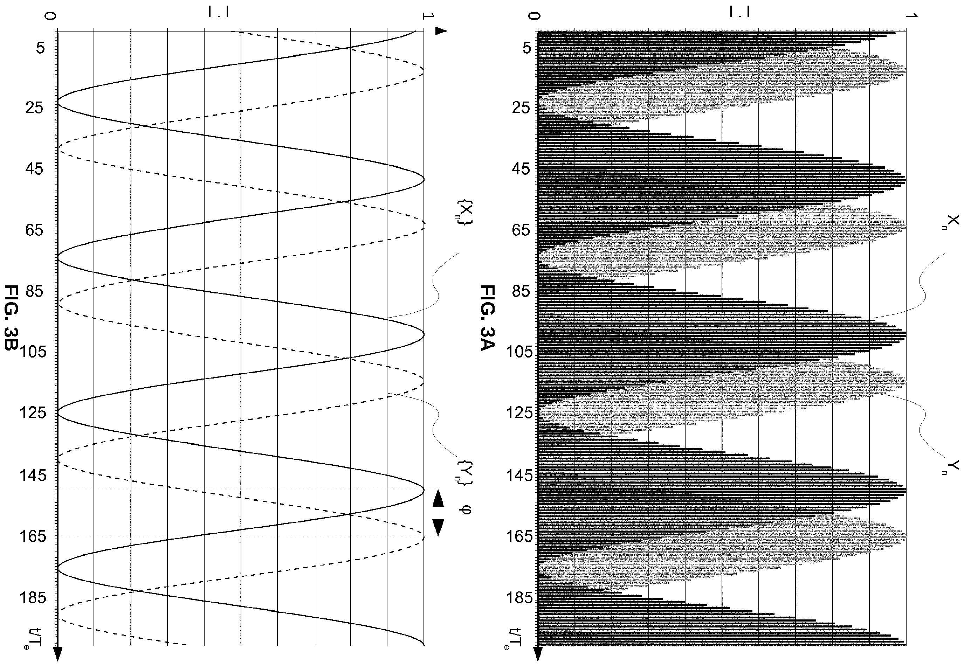

Dans un mode préféré de réalisation illustré sur les figures, les capteurs 3A, 3B sont des capteurs magnétiques détectant la quantité de métal aux points P1, P2 respectivement. Les capteur 3A, 3B magnétiques produisent respectivement un signal analogique X(t) et un signal analogique Y(t) fonctions du temps, qui sont échantillonnés à une fréquence d'échantillonnage Fe et quantifiés pour obtenir des signaux numériques Xn, Yn comme représentés sur la figure 3A. La conversion des signaux analogiques X(t), Y(t) en les signaux numériques Xn, Yn est réalisée par un ou plusieurs convertisseurs analogiques/numériques éventuellement intégrés aux capteurs 3A, 3B.

Sur la figure 3A, le signal numérique Xn est associé au capteur 3A ; le signal numérique Yn est associé au capteur 3B. L'indice n est ici un indice générique. Classiquement, les signaux numériques Xn et Yn sont définis par :

$$\begin{cases} X_n = X(t_n) \\ Y_n = Y(t_n) \\ t_n = nT_e \end{cases}$$

Où n est un entier et Te une période d'échantillonnage des signaux numériques Xn, Yn et X(t), Y(t) sont les signaux analogiques représentant une évolution temporelle des grandeurs d'intérêt X, Y, une quantité de métal dans le cas décrit ici.

Dans un souci de clarté, des enveloppes {Xn}, {Yn} des signaux échantillonnés détectés par les capteurs 3A, 3B sont représentées sur la figure 3B. Sur la figure, l'enveloppe {Xn} associée au capteur 3A apparaît en trait plein, tandis que l'enveloppe {Yn} associée au capteur 3B apparaît en trait interrompu.

Sur la figure 3B, un pic de l'enveloppe {Xn} du signal numérique Xn correspond au passage d'une dent du pignon 2A au point P1 ; un pic de l'enveloppe {Yn} du signal numérique Yn correspond au passage d'une dent du pignon 2B au point P2, c'est-à-dire à une quantité de métal maximale passant dans le champ de mesure du capteur magnétique correspondant. De la même manière, un creux de l'enveloppe desdits signaux numériques correspond à une absence de dent, c'est-à-dire une quantité minimale d'élément métallique passant devant ledit champ de mesure.

Les courbes des figures 3A et 3B correspondent à une évolution d'une amplitude IXnI, IYnI, notée I . I sur les dessins, des signaux numériques Xn, Yn générés respectivement par les capteurs 3A, 3B, ou de leur enveloppe, dans une forme de réalisation dans laquelle un pignon présente dix-neuf dents et une vitesse de rotation de 4,14 tours/seconde, et l'autre pignon présente vingt-trois dents et une vitesse de rotation de 3,42 tours/seconde. Sur les figures, les signaux numériques sont normés, de sorte que l'amplitude des signaux est inférieure ou égale à 1, mais en pratique une normalisation n'est pas indispensable.

D'autres capteurs peuvent également être mis en oeuvre sans toutefois limiter la portée de l'invention, par exemple des capteurs optiques. Dans ce dernier cas, le capteur pourra par exemple détecter la présence ou l'absence de matière ; les courbes résultantes pouvant osciller entre deux valeurs, selon le cas, par exemple entre 1 en présence de matière et -1 en absence de matière.

Il peut être observé que les signaux numériques Xn et Yn sont déphasés d'un déphasage $\varphi$. La valeur de ce déphasage $\varphi$ est a priori inconnue.

Les signaux numériques Xn, Yn comprennent un nombre N d'échantillons, supérieur à deux fois le nombre d'échantillons par cycle Nc et préférentiellement environ égal à vingt fois le nombre d'échantillons par cycle Nc, un cycle étant défini comme un motif élémentaire du signal Xn ou Yn répété au cours du temps de manière sensiblement périodique, par exemple le nombre d'échantillons entre deux pics de l'enveloppe {Xn}, {Yn} de l'un ou l'autre des signaux numériques Xn, Yn. Si les signaux Xn, Yn présentent des nombres d'échantillons par cycle Nc différents, il est retenu le maximum des deux. Dans l'exemple illustré sur les figures, le nombre d'échantillons par cycle Nc est environ égal à 50.

Dans une sous-étape ultérieure d'ajustement 102, il est calculé un coefficient de corrélation C(k) entre les signaux numériques Xn et Yn mesurés, assorti d'un paramètre k entier variable :

$$C(k) = \frac{1}{M}\sum_{i=1}^{M} \frac{X_i - mx}{\sigma_x} \times \frac{Y_{i+k} - my}{\sigma_y}$$

Où :

- M est un entier compris entre deux fois Nc et N, N étant par exemple égal à vingt fois Nc.
- mx et my sont respectivement les moyennes des valeurs des signaux Xn et Yn sur les M échantillons ;
- $\sigma$x et $\sigma$y sont respectivement les écarts-types des valeurs des signaux Xn et Yn sur les M échantillons.

Le coefficient de corrélation C(k) quantifie donc une corrélation entre le signal numérique Xn et une version du signal numérique Yn décalée de k échantillons, dans le sens des n croissants ou décroissants suivant que k est respectivement positif ou négatif.

A titre d'exemple, pour k = 0, le coefficient de corrélation C(0) quantifie la corrélation entre les signaux Xn et Yn tels que mesurés.

Au cours de la sous-étape d'ajustement 102, il est recherché le paramètre k permettant de se rapprocher autant que possible d'une corrélation forte entre le signal Xn et le signal Yn décalé. En d'autres termes, il est recherché un paramètre d'ajustement k1 maximisant une valeur absolue du coefficient de corrélation C(k) :

$$|C(k_1)| = \max_k \left| \frac{1}{M}\sum_{i=1}^{M} \frac{X_i - m_X}{\sigma_X} \times \frac{Y_{i+k} - m_Y}{\sigma_Y} \right|$$

Par la suite, le coefficient de corrélation C(k1) calculé au cours de l'étape d'apprentissage 100 et évalué en k1 est appelé « coefficient de corrélation initial ».

Dans la suite de la description, une apostrophe est utilisée pour distinguer les grandeurs mesurées ou calculées au cours de l'étape de surveillance 110 de celles mesurées ou calculées au cours de l'étape d'apprentissage 100.

L'étape de surveillance 110 du procédé 10 selon l'invention comporte une sous-étape de mesurage 111 et une sous-étape de détermination de l'allongement 112.

La sous-étape de mesurage 111 est similaire à la sous-étape de mesurage 101 de l'étape d'apprentissage 100, et consiste à générer des signaux numériques X'n et Y'n à l'aide respectivement des capteurs 3A et 3B.

Une fois la sous-étape de mesurage 111 terminée, un coefficient de corrélation courant C'(k1) entre les signaux X'n, Y'n nouvellement générés est calculé au cours d'une sous-étape de détermination de l'allongement 112, pour le paramètre k égal à k1, k1 étant le paramètre d'ajustement déterminé au cours de l'étape d'apprentissage 100 :

$$C'(k_1) = \frac{1}{M}\sum_{i=1}^{M} \frac{X'_i - m_{X'}}{\sigma_{X'}} \times \frac{X'_{i+k_1} - m_{Y'}}{\sigma_{Y'}}$$

En absence d'allongement de la chaîne de transmission 1, il y a égalité entre les coefficients de corrélation initial C(k1) et courant C'(k1).

Dans le cas contraire, l'enroulement du brin tendu de la chaîne de transmission 1 allongée, sur le pignon enrouleur, va légèrement retarder ledit pignon enrouleur, c'est-à-dire va retarder le passage des dents devant le capteur associé audit pignon. Dans l'exemple illustré sur la figure 1A, le pignon enrouleur est le pignon 2A.

De par ce retard, le déphasage φ entre les signaux numériques Xn, Yn va être modifié. Tel que défini sur les figures, le déphasage φ va ainsi diminuer.

En conséquence, en présence d'un allongement de la chaîne de transmission 1, un écart est constaté entre les coefficients de corrélation initial C(k1) et courant C'(k1) déterminés respectivement au cours des étapes d'apprentissage 100 et de surveillance 110.

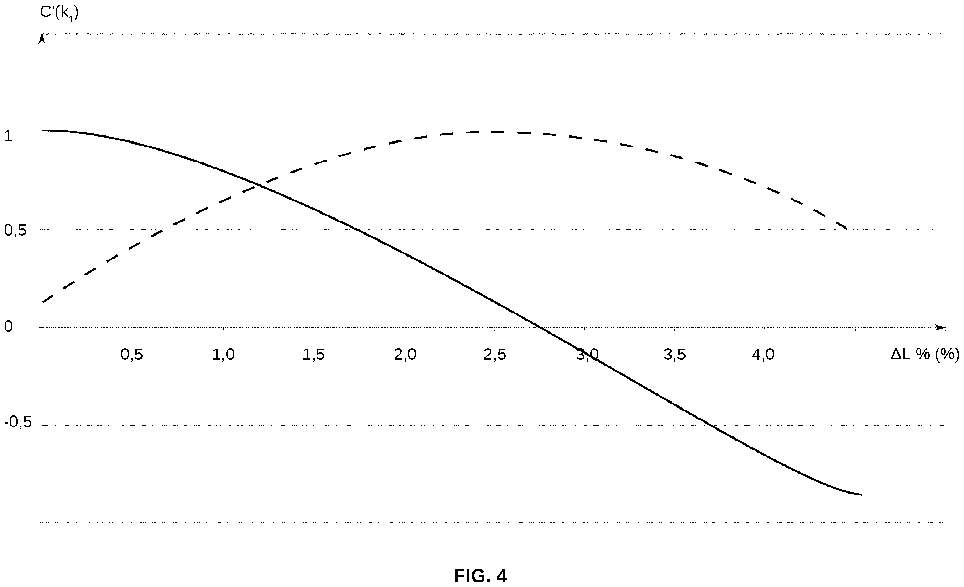

La courbe en trait plein sur la figure 4 illustre une évolution du coefficient de corrélation courant C'(k1) en fonction d'un pourcentage d'allongement ΔL% de la chaîne correspondant à un rapport d'un allongement ΔL d'une maille de ladite chaîne à une longueur L0 de ladite maille à l'état neuf :

$$\Delta L\% = \frac{\Delta L}{L_0}$$

La courbe de la figure 4 peut être obtenue par calcul, ou par des mesures réalisées sur une chaîne tout au long de sa durée de vie.

Connaissant le coefficient de corrélation courant C'(k1), on déduit de la lecture de la figure 4 le pourcentage d'allongement ΔL%.

Il peut être remarqué que le paramètre d'ajustement k1 peut être choisi de manière différente au cours de l'étape d'apprentissage 100, et ne correspond pas nécessairement à un maximum en valeur absolue du coefficient de corrélation. Ainsi, ce paramètre peut être choisi par exemple comme étant nul. La courbe en trait interrompu sur la figure 4 illustre l'évolution en fonction du pourcentage d'allongement ΔL% du coefficient de corrélation courant C'(0).

Le choix du paramètre d'ajustement k1 a une influence sur la sensibilité de la détermination du pourcentage d'allongement ΔL%.

En effet, comme il peut être remarqué sur la figure 4, la dérivée du coefficient de corrélation par rapport au pourcentage d'allongement est proche de zéro, pour le paramètre d'ajustement k1 maximisant le coefficient de corrélation C(k) comme décrit plus haut, pour une plage de valeurs de pourcentage d'allongement ΔL% comprises globalement entre 0% et 0,20%. Ainsi, un allongement sur cette plage de valeurs a un impact faible sur la valeur du coefficient de corrélation courant C'(k1), rendant moins précise une détermination du pourcentage d'allongement.

Au contraire, l'évolution du coefficient de corrélation courant C'(k1) est, dans ce cas, sensiblement affine sur une plage de valeurs allant sensiblement de 2% à 4%, avec une dérivée du coefficient de corrélation par rapport au pourcentage d'allongement sensiblement maximale en valeur absolue. Un allongement sur cette plage de valeurs a donc un impact plus important sur la valeur du coefficient de corrélation courant C'(k1) que sur les plages de valeur inférieures, la détermination du pourcentage d'allongement ΔL% est donc plus précise sur cette plage de valeurs dans la mesure où un allongement sur cette plage de valeurs a un impact plus important sur la valeur du coefficient de corrélation courant C'(k1) que pour lesdites plages de valeur inférieures.

Ces conclusions sont modifiées dans le cas d'un paramètre d'ajustement k1 égal à zéro. Il peut être constaté sur la figure 4 que la dérivée du coefficient de corrélation courant C'(0) par rapport au pourcentage d'allongement est plus importante pour des faibles allongements que pour des allongements relativement élevés. La détermination du pourcentage d'allongement ΔL% sera donc plus précise dans ce cas sur la plage de valeurs allant de 0% à 1% que sur la plage de valeurs allant de 1,5% à 3%.

La tolérance d'allongement étant un pourcentage d'allongement ΔL% égal à 3%, il est préférentiellement retenu lors de l'étape d'apprentissage 100 un paramètre d'ajustement k1 maximisant le coefficient de corrélation C(k), comme décrit plus haut, ce qui permet de déterminer avec précision le pourcentage d'allongement ΔL% au voisinage de 3% et ainsi s'assurer de ne pas dépasser cette tolérance.

Toutefois, comme il vient d'être vu, une autre valeur du paramètre d'ajustement k1 peut être retenue.

Le choix du paramètre d'ajustement k1 permet ainsi de sélectionner la plage de pourcentage d'allongement ΔL% sur laquelle la détermination dudit pourcentage exige une sensibilité importante, par exemple aux environs de la limite de tolérance de 3%. Le choix de ce paramètre d'ajustement k1 pourra varier d'une application à une autre.

Préférentiellement, plusieurs courbes représentant l'évolution du coefficient de corrélation courant C'(k1) en fonction du pourcentage d'allongement ΔL% sont représentées, pour des paramètres d'ajustement k1 différents, sur un abaque, pour permettre leur lecture, comme illustré par exemple sur la figure 4 avec deux paramètres d'ajustement k1 différents. L'abaque est par exemple réalisé dans une étape préalable à l'étape d'apprentissage 100. La valeur du pourcentage d'allongement ΔL% est ainsi déduite de la lecture de l'abaque en fonction du paramètre d'ajustement k1 retenu. Le choix du paramètre d'ajustement k1 lors de l'étape d'apprentissage 100 peut ainsi être réalisé en fonction de la plage de valeurs d'intérêt du pourcentage d'allongement ΔL%, à la lecture de l'abaque. Par exemple, si la plage de valeurs d'intérêt est comprise entre 0% et 1%, il sera choisi à la lecture de l'abaque de la figure 4 un paramètre d'ajustement nul, comme vu plus haut.

Dans un mode de mise en oeuvre alternatif du procédé selon l'invention, il est considéré pour la détermination du pourcentage d'allongement ΔL% au moins une courbe représentant un cumul Σ des écarts, en valeur absolue, au fur et à mesure de l'allongement de la chaîne 1, entre le coefficient de corrélation courant C'(k1) et le coefficient de corrélation initial C(k1), en fonction du pourcentage d'allongement ΔL% :

$$\Sigma(\Delta L\%) = \int_0^{\Delta L\%} |C'(k_1, \Delta l\%) - C(k_1)| d\Delta l\%$$

Où Δl% est une variable muette représentant le pourcentage d'allongement et dΔl% est une variation infinitésimale de cette variable.

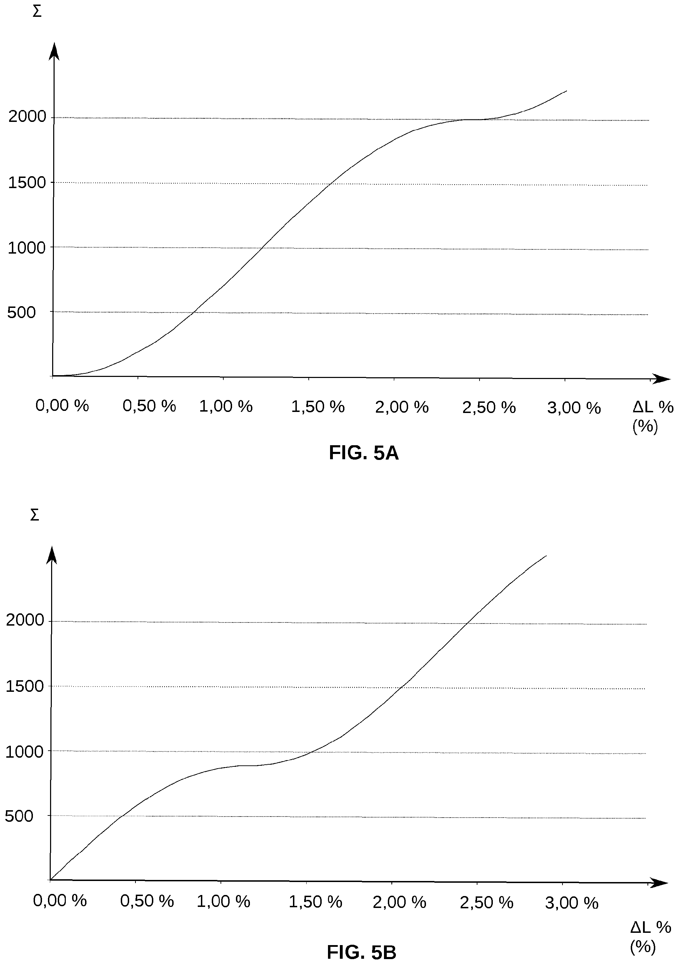

La figure 5A illustre une évolution du cumul Σ dans le cas où le paramètre d'ajustement k1 est choisi au cours de l'étape d'apprentissage 100 comme maximisant le coefficient de corrélation C(k).
La figure 5B illustre une évolution du cumul Σ dans le cas où le paramètre d'ajustement k1 est choisi nul.

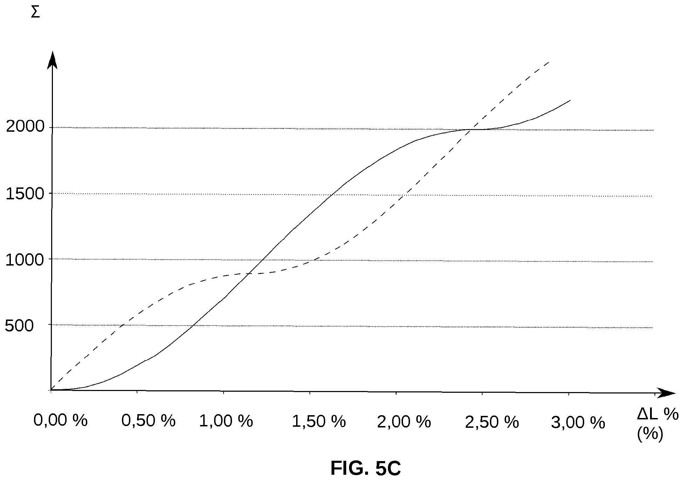

La figure 5C représente un abaque regroupant les courbes des figures 5A et 5B, la courbe de la figure 5A étant représentée en trait plein et la courbe de la figure 5B étant représentée en trait interrompu.

En pratique, au cours de la sous-étape de détermination de l'allongement 112, le cumul Σ des écarts peut être approché de manière itérative, de la manière suivante :

$$\begin{cases} \Sigma(p+1) = \Sigma(p) + |C'(k_1, p+1) - C'(k_1, p)| \\ \Sigma(0) = 0 \end{cases}$$

Où :

- p désigne la p-ième itération de calcul, avec p un entier naturel ;
- $\Sigma(p)$ désigne le cumul Σ des écarts à la p-ième itération ;
- $C'(k_1, p+1)$ désigne le coefficient de corrélation courant, évalué en k1, à l'itération p+1, et déterminé au cours de la sous-étape de comparaison 112 courante ;
- $C'(k_1, p)$ désigne le coefficient de corrélation courant, évalué en k1, à l'itération p et déterminé au cours d'une sous-étape de comparaison 112 antérieure.

Une itération de calcul se déroule au cours d'une itération de la sous-étape de comparaison 112, l'étape de surveillance 110 étant répétée tout au long de la durée de vie de la chaîne 1, l'itération p=0 correspondant à la première occurrence de ladite étape de surveillance.

Connaissant le cumul Σ, il est ainsi possible d'en déduire à la lecture des courbes de l'abaque de la figure 5C, le pourcentage d'allongement ΔL%.

L'utilisation de telles courbes, et préférentiellement d'un abaque comme illustré sur la figure 5C permet d'atteindre des valeurs de sensibilité de la détermination du pourcentage d'allongement ΔL% au minimum de l'ordre de 50 sur les plages de valeurs sur lesquelles les courbes de l'abaque suivent une évolution affine, c'est-à-dire qu'une variation de 0,1% du pourcentage d'allongement ΔL% conduit à une variation du cumul Σ de l'ordre de 5%. Le choix du paramètre d'ajustement k1, et donc le choix de la courbe, permet de sélectionner les plages de valeur du pourcentage d'allongement ΔL% sur lesquelles la sensibilité sera importante. Le choix dudit paramètre d'ajustement pourra ainsi varier d'une application à une autre.

Dans un mode préféré de mise en oeuvre du procédé selon l'invention, au moins une alarme est mise en oeuvre pour prévenir un opérateur d'un allongement excessif de la chaîne de transmission 1. A titre d'exemple, il peut être mis en oeuvre trois alarmes se déclenchant pour des pourcentages d'allongement ΔL% de 2%, 2,5% et 3%. Le paramètre d'ajustement k1 pourra être choisi pour permettre une détermination particulièrement précise du pourcentage d'allongement ΔL% autour d'au moins une de ces valeurs, c'est-à-dire de sorte qu'au moins une de ces valeurs se trouve sur une plage de valeurs pour laquelle la sensibilité de la détermination est importante, comme décrit précédemment.

L'étape de surveillance 110 est répétée à intervalles réguliers, par exemple toutes les trente secondes ou toutes les minutes, afin d'assurer une surveillance de l'allongement de la chaîne de transmission 1 au cours du temps.

La mise en oeuvre du procédé selon l'invention permet de déterminer l'allongement de la chaîne de transmission 1 avec une précision importante, en particulier en raison du choix du paramètre d'ajustement k1 au cours de l'étape d'apprentissage 100.

Le procédé 10 selon l'invention présente en particulier les avantages suivants :

- il n'est pas nécessaire de connaître la géométrie la chaîne de transmission 1 ; en particulier, une pollution de la chaîne de transmission du type présence de limaille de fer sur quelques mailles, n'empêche pas la détermination du pourcentage d'allongement ΔL% ;
- il est possible d'obtenir une sensibilité importante de la détermination du pourcentage d'allongement ΔL% sur des plages de valeur d'intérêt dudit pourcentage d'allongement ;
- la position relative des capteurs est libre, en particulier, il n'est pas nécessaire de connaître la distance entre ces capteurs ;
- il n'est pas nécessaire de connaître la vitesse V de la chaîne ;
- la détermination de l'allongement bénéficie d'une précision importante, en particulier en raison du choix du paramètre d'ajustement k1 au cours de l'étape d'apprentissage.

## Revendications

1. Procédé (10) pour la détermination d'un allongement d'une chaîne de transmission mécanique (1) mise en mouvement par deux pignons (2A, 2B) comportant chacun une denture contrôlée par un capteur (3A, 3B), ledit procédé étant **caractérisé en ce qu'**il comporte :

   - une étape d'apprentissage (100) au cours de laquelle des signaux numériques Xn, Yn sont générés à partir desdits capteurs et un paramètre d'ajustement k1 entier est choisi sur la base desdits signaux numériques, en fonction d'un objectif de sensibilité de la détermination de l'allongement de la chaîne de transmission (1) ;
   - une étape ultérieure de surveillance (110) au cours de laquelle :

     • des signaux numériques X'n, Y'n sont générés à partir desdits capteurs ;
     • un coefficient de corrélation courant C'(k1) entre lesdits signaux numériques X'n, Y'n est évalué au paramètre d'ajustement k1 ;
     • un pourcentage d'allongement ΔL% de la chaîne de transmission mécanique (1) est déterminé en fonction dudit coefficient de corrélation courant C'(k1).

2. Procédé selon la revendication 1 **caractérisé en ce que** le pourcentage d'allongement ΔL% est déduit de la lecture d'un abaque représentant une évolution du coefficient de corrélation courant C'(k1) en fonction du pourcentage d'allongement ΔL% et du paramètre d'ajustement k1.

3. Procédé selon la revendication 1 **caractérisé en ce que** le pourcentage d'allongement ΔL% est déduit de la lecture d'un abaque représentant une évolution d'un cumul Σ des écarts, en valeur absolue, au fur et à mesure de l'allongement de la chaîne 1, entre le coefficient de corrélation courant C'(k1) et un coefficient de corrélation initial C(k1) calculé au cours de l'étape d'apprentissage (100), en fonction du pourcentage d'allongement ΔL% et du paramètre d'ajustement k1.

4. Procédé selon l'une quelconque des revendications précédentes **caractérisé en ce que** le paramètre d'ajustement k1 est choisi comme étant un paramètre maximisant ou minimisant une valeur absolue d'un coefficient de corrélation C(k) entre les signaux numériques Xn, Yn, où k est un paramètre entier.

5. Procédé selon l'une quelconque des revendications précédentes **caractérisé en ce que** l'étape de surveillance (110) comporte une sous-étape de déclenchement d'au moins une alarme lorsque le pourcentage d'allongement de la chaîne de transmission (1) dépasse au moins une valeur seuil.

**6.** Procédé selon la revendication 5 **caractérisé en ce qu'**une de l'au moins une valeur seuil est égale à 3%.

**7.** Dispositif pour la mise en oeuvre du procédé selon l'une quelconque des revendications précédentes, comportant :

- une chaîne de transmission mécanique (1) mise en mouvement par deux pignons (2A, 2B) comportant chacun une denture ;
- deux capteurs (3A, 3B) à partir desquels sont générés les signaux numériques Xn, Yn, X'n, Y'n ;

ledit dispositif étant **caractérisé en ce qu'**il comporte par ailleurs des moyens de calcul pour :

- choisir un paramètre d'ajustement k1 ;
- évaluer un coefficient de corrélation courant C'(k1) entre lesdits signaux numériques au paramètre d'ajustement k1 ;
- déterminer le pourcentage d'allongement ∆L% de la chaîne de transmission mécanique (1) en fonction dudit coefficient de corrélation courant C'(k1).

**8.** Dispositif selon la revendication 7 **caractérisé en ce qu'**il comporte par ailleurs des moyens pour comparer le pourcentage d'allongement ∆L% de la chaîne de transmission (1) à au moins une valeur seuil et déclencher au moins une alarme en fonction de la valeur dudit pourcentage d'allongement de la chaîne.

**9.** Dispositif selon la revendication 7 ou la revendication 8 **caractérisé en ce que** les capteurs (3A, 3B) sont des capteurs magnétiques.

**FIG. 1A**

**FIG. 1B**

10

101

Xn, Yn

102

$k_1$

100

111

X'n, Y'n

112

ΔL%

110

**FIG. 2**

**FIG. 3A**

**FIG. 3B**

**FIG. 4**

FIG. 5A

FIG. 5B

FIG. 5C

Europäisches Patentamt
European Patent Office
Office européen des brevets

# RAPPORT DE RECHERCHE EUROPEENNE

Numéro de la demande

EP 17 20 7956

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2016/116356 A1 (GOLDSTEIN MICHAEL D [IL]) 28 avril 2016 (2016-04-28) | 1,7 | INV. G01B21/16 |
| Y | * alinéas [0060], [0067]; figures 4a,4c,7c * | 1-9 | F16G13/00 G01M13/02 |
| | ----- | | G01B5/16 |
| Y | EP 3 196 625 A1 (RENOLD PLC [GB]) 26 juillet 2017 (2017-07-26) * le document en entier * | 1-9 | G01B7/04 G01B11/14 |
| | ----- | | |
| Y | JP 2000 291748 A (HITACHI BUILDING SYS CO LTD) 20 octobre 2000 (2000-10-20) * le document en entier * | 1-9 | |
| | ----- | | |
| Y | US 2016/010977 A1 (FROST CHARLES C [US] ET AL) 14 janvier 2016 (2016-01-14) * le document en entier * | 1-9 | |
| | ----- | | |

| DOMAINES TECHNIQUES RECHERCHES (IPC) |
|---|
| G01B G01M F16G |

Le présent rapport a été établi pour toutes les revendications

| Lieu de la recherche | Date d'achèvement de la recherche | Examinateur |
|---|---|---|
| Munich | 19 avril 2018 | Grand, Jean-Yves |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

..................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 17 20 7956

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-04-2018

| Document brevet cité au rapport de recherche | | | Date de publication | Membre(s) de la famille de brevet(s) | | | Date de publication |
|---|---|---|---|---|---|---|---|
| US | 2016116356 | A1 | 28-04-2016 | US<br>WO | 2016116356<br>2014199376 | A1<br>A1 | 28-04-2016<br>18-12-2014 |
| EP | 3196625 | A1 | 26-07-2017 | AUCUN | | | |
| JP | 2000291748 | A | 20-10-2000 | JP<br>JP | 3570914<br>2000291748 | B2<br>A | 29-09-2004<br>20-10-2000 |
| US | 2016010977 | A1 | 14-01-2016 | CA<br>EP<br>US<br>WO | 2954521<br>3167267<br>2016010977<br>2016007454 | A1<br>A2<br>A1<br>A2 | 14-01-2016<br>17-05-2017<br>14-01-2016<br>14-01-2016 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9772179 B
- GB 2377918 A
- US 5563392 A